(19) Europäisches Patentamt
European Patent Office
Office européen des brevets

(11) **EP 4 524 607 A1**

(12) **EUROPEAN PATENT APPLICATION**

(43) Date of publication:
**19.03.2025 Bulletin 2025/12**

(21) Application number: **23218722.9**

(22) Date of filing: **20.12.2023**

(51) International Patent Classification (IPC):
**G01S 7/41** *(2006.01)*    **G01S 13/534** *(2006.01)*
**G01S 13/66** *(2006.01)*    **G01S 7/292** *(2006.01)*

(52) Cooperative Patent Classification (CPC):
**G01S 7/414; G01S 7/2923; G01S 13/534;
G01S 13/66;** G01S 13/937

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.09.2023 JP 2023149852**

(71) Applicant: **Furuno Electric Company Limited
Hyogo 662-8580 (JP)**

(72) Inventors:
• **UOSHITA, Seiichi
Nishinomiya-City, 662-8580 (JP)**

• **FUJIOKA, Daisuke
Nishinomiya-City, 662-8580 (JP)**
• **TAKAHASHI, Hironori
Nishinomiya-City, 662-8580 (JP)**

(74) Representative: **Müller Hoffmann & Partner
Patentanwälte mbB
St.-Martin-Straße 58
81541 München (DE)**

Remarks:
Amended claims in accordance with Rule 137(2)
EPC.

(54) **TARGET TRACKING APPARATUS AND TARGET TRACKING METHOD**

(57)    The présent invention discloses a target tracking apparatus for tracking target in a détection area of the invention is provided using. An écho data acquiring module (11) is configured to acquire écho data indicating a correspondence relationship between a position in the détection area and the level of the reflected wave at which the electromagnetic wave transmitted through the antenna (21) is reflected at the position. A target extracting module (14) configured to extract a target (S) based on the écho data. An index calculator (15) configured to calculate an index indicating a wobble of the target (S) whose level of the reflected wave is a predetermined value or higher based on a plurality of écho data in a time series. An index calculator (15) configured to détermine a threshold based on the size of target (S) and détermine whether the index is equal to or greater than the threshold.

FIG. 1

**EP 4 524 607 A1**

**Description**

The present invention relates to a target tracking apparatus and a target tracking method.

Conventionally, many techniques have been developed to suppress clutter in radar equipment having a function of tracking a target based on echo data. For example, a Japanese Patent Application No. 2012 -103197 describes a scanning correlation method corresponding to a moving target as follows.

The moving-target correspondence type scan correlation method includes a receiving video memory for storing video signals sequentially outputted from a signal receiving section of a radar, an ultrasonic wave, and an optical camera device for each scan; a moving vector calculating section for dividing a plurality of scan images stored in the receiving video memory into a small section area and calculating a moving vector of a target existing in the area; a target index calculating section for calculating an index indicating the possibility of the presence of a target in the small section area; a clutter level calculating section for calculating a clutter level in the small area; a scan correlation processing section for using the respective outputs of the target index calculating section, the moving vector calculating section, and the clutter level calculating section as inputs; and a display section for displaying the output of the scan correlation processing section.

However, beyond the technology described in Japanese Patent Application, it is desirable to realize a technology capable of suppressing false tracking of target S in a radar apparatus.

The present invention is made to solve the above-mentioned problems, and the target tracking apparatus, target tracking method, and target tracking program capable of suppressing false tracking of target S are provided.

(1) To solve the above-mentioned problem, a target tracking apparatus according to an aspect of the present invention is an apparatus for tracking a target in a target detection area, and is provided with an echo data acquiring module configured to acquire echo data indicating a correspondence relationship between a position in the detection area and the level of the reflected wave at which the electromagnetic wave transmitted through the antenna is reflected at the position; a target extracting module configured to extract a target based on the echo data; an index calculator configured to calculate an index indicating a wobble of a target whose level of the reflected wave is equal to or greater than a predetermined value based on a plurality of echo data in a time series; an index calculator configured to calculate an index indicating a wobble of the target whose level of the reflected wave is equal to or greater than a predetermined value based on echo data of the target and determine a threshold based on the size of the target; and a tracking processing module configured to track the target based on the target echo data. Here, the tracking processing module is configured to track the target when the index is less than the threshold and remove the target when the index is equal to or greater than the threshold.

While a target having a large wobble may not necessarily be a target to be detected, such as a clutter generating point. By determining whether or not the index indicating the wobble of the target is equal to or greater than the threshold, it is possible to determine whether or not the detected target should be a target. For example, in accordance with the determination result, as to whether or not the target should be a tracking target.

In accordance with a determination of a threshold based on the size of the target, a more appropriate determination as to whether or not the target should be a tracking target may be made. For example, by using a threshold that takes into account the size of the wobble that may be detected in the echo data in accordance with the size of the target relative to the beam width output from the radar equipment. Therefore, false tracking of the target may be suppressed.

In addition, while tracking the target with small wobble, the target with large wobble, such as a clutter generation point, may be suppressed, thereby suppressing false tracking of the target and reducing the processing load in the tracking processing.

(2) The target tracking apparatus of the invention may also be provided with the tracking processing module configured to track the target in a normal tracking process when the index is less than the threshold and track the target in a background tracking process when the index is equal to or greater than the threshold, instead of the above configuration.

(3) In light of the above (2), the tracking processing module may further perform background tracking processing to track the removed target in the background tracking process, and the tracking processing module may perform processing to display the target tracked in the normal tracking processing and may not perform processing to display the target tracked in the background tracking processing.

It makes it possible to display only the target with small wobble as the target to be displayed while continuing tracking of the target with large wobble, such as a clutter generation point.

(4) In light of the above (2), the tracking processing module may further perform background tracking processing to track the removed target in the tracking processing, and the tracking processing module may perform processing to display the target tracked in the tracking processing and the target tracked in the background tracking processing in different manners from each other.

It makes it possible to display the target whose display is highly necessary and the target whose wobble is large, such as a clutter generation point, separately.

(5) In light of the above (2), the echo data acquiring module may periodically acquire the echo data, and the tracking processing module may remove the target tracked based on a first echo data and echo data acquired after the first echo data, when the index indicating the wobble of the target extracted based on the first echo data is equal to or greater than the threshold.

Since it is not necessary to determine whether the index is equal to or greater than the threshold, every time the echo data is acquired, the processing load in the tracking processing may be reduced.

(6) In any of the above (1) to (5), the index calculator may approximate the target by a polygonal reference shape and determine the threshold based on the size of the reference shape. The threshold based on the size of the target may be determined by simple processing.

(7) In any of the above (1) to (5), the index calculator may approximate the target by a reference shape surrounded by two straight lines extending in the distance direction from the antenna and two arcs extending in the azimuthal direction around the antenna and determine the threshold based on the size of the reference shape. The threshold based on the size of the target may be determined by a simple process.

(8) In any of the above (1) to (7), the index calculator may calculate the size of the target based on the distance between the antenna and the target. The size of the target may be calculated more accurately considering the distance between the antenna and the target, and thus a more appropriate threshold corresponding to the actual size of the target can be determined.

(9) In any of the above (1) to (8), the index calculator may further determine the threshold based on AIS (Automatic Identification System) information transmitted from another vessel. It makes it possible to determine a more appropriate threshold based on the size of another ship indicated by the AIS information from another vessel.

(10) A target tracking method for tracking target in a detection area comprises acquiring echo data indicating a correspondence relationship between a position in the detection area and the level of the reflected wave at which the electromagnetic wave transmitted through the antenna is reflected at the position; extracting a target based on the echo data; calculating an index indicating a wobble of a target whose level of the reflected wave is equal to or greater than a predetermined value based on a plurality of echo data in a time series and determining a threshold based on the size of the target and determine whether the index is equal to or greater than the threshold.

Here, the tracking of the target in a normal tracking process when the index is less than the threshold, and target tracking method includes tracking the target from the target in the background tracking process when the index is equal to or greater than the threshold.

The target tracking method may include displaying the target tracked in the normal tracking process and skipping to display the target tracked by the background tracking process.

The target tracking method may include displaying the target tracked, and displaying the target tracked by the background tracking process in a manner different from the target tracked by the normal process.

The target tracking method may include acquiring the echo data periodically, and removing the target tracked based on a first echo data and echo data acquired after the first echo data, when the index indicating the wobble of the target extracted based on the first echo data is equal to or greater than the threshold.

The target tracking method may include approximating the target by a polygonal reference shape; and determining the threshold based on the size of the polygonal reference shape.

The target tracking method may include approximating the target by a reference shape surrounded by two lines extending in the distance direction from the antenna and two arcs extending in the azimuthal direction around the antenna; and determining the threshold based on the size of the reference shape.

A target with a large wobble may not be a target to be detected, such as a clutter occurrence point. It is possible to determine whether or not a target should be a tracking target by determining whether or not an index indicating wobble of the target is equal to or greater than a threshold. It makes it possible to determine whether or not a target should be a tracking target by determining a threshold based on the size of the target. For example, the size of the target may vary depending on the beam width output from the radar equipment. By using a threshold that takes into account the size of the wobble that may still be detected, false tracking of the target may be appropriately suppressed.

According to the present invention, it is possible to suppress false tracking of a target in a radar apparatus.

Figure 1 is a diagram showing a configuration of a radar equipment according to an embodiment of the present invention.

Figure 2 is a diagram showing an example of an echo image displayed by a tracking processing module in the radar equipment according to an embodiment of the present invention.

Figure 3 is a diagram showing a trail of a target to be detected by the radar equipment according to an embodiment of the present invention and a trail of a clutter generation point.

Figure 4 is a diagram showing an example of a method for calculating an index by the tracking processing module in the radar equipment according to an embodiment of the present invention.

Figure 5 is a diagram showing an example of a method for calculating the index by the tracking processing module in the radar equipment according to an embodiment of the present invention.

Figure 6 is a diagram showing an example of a method for determining a threshold by the tracking processing module in the radar equipment according to an embodiment of the present invention.

Figure 7 is a diagram showing another configuration of the radar equipment according to an embodiment of the present invention.

Figure 8 is a flowchart showing an example of an operation when a target tracking processing module in the radar equipment according to an embodiment of the present invention performs tracking processing.

Hereinafter, an embodiment of the present invention will be described with reference to the drawings. The same reference numerals are used for the same or equivalent portions in the drawings, and the description is not repeated. In addition, at least a part of the following embodiments may be optionally combined.

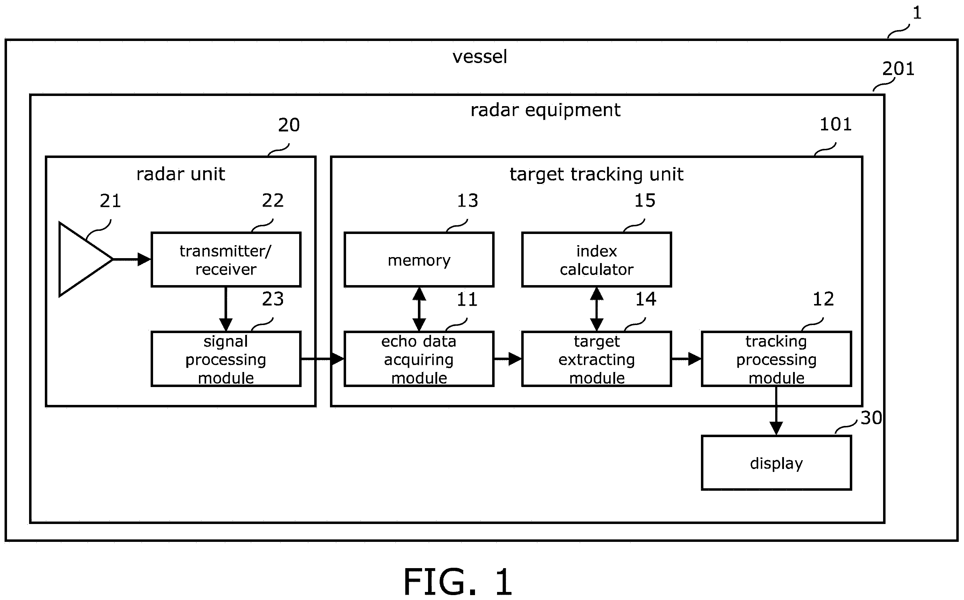

Figure 1 is a diagram showing a configuration of a radar equipment, according to an embodiment of the present invention.

Referring to figure 1, a radar equipment (201) includes a radar unit (20), a target tracking unit (101) and a display (30) to display a result of a tracking target. The target tracking unit (101) is an example of a target tracking apparatus. The radar unit (20) includes an antenna (21), a transmitter/receiver (22), and a signal processing module (23). The target tracking unit (101) includes an echo data acquiring module (11), a tracking processing module (12), a memory (13), a target extracting module (14) and an index calculator (15).

Some or all of the transmitter/receiver (22), the signal processing module (23), the echo data acquiring module (11), and the tracking processing module (12) are implemented, for example, by a processing circuit (Circuitry) that includes one or more processors. The memory (13) is, for example, a nonvolatile memory included in the processing circuit.

The radar equipment (201) is arranged on a vessel (1). The target tracking unit (101) tracks the target (S) of another vessel or the like in the target detection area Ta and displays an echo image indicating the position of the target (S) on a display device (not shown). For example, the target detection area (Ta) is an area inside a circle of a predetermined size centered on the vessel (1).

Radar unit - the radar unit (20) outputs divided echo data (EdD), which is the echo data (Ed) indicating the correspondence between a position in the divided target area (Da) and the echo level at the position, based on the reflected wave reflected by the electromagnetic wave transmitted through the antenna (21). The divided target area (Da) is a sectorial area in which the target detection area (Ta) is divided into (N) parts along the azimuthal direction. N is an integer of 2 or more. The echo level at each position of the divided echo data (EdD) indicates the level of the reflected wave reflected at that position. For example, the radar unit (20) outputs the divided echo data (EdD) at an output timing following a predetermined generation period.

More specifically, the transmitter/receiver (22) transmits the electromagnetic wave from an antenna (21) and receives the reflected wave reflected by the transmitted electromagnetic wave from the antenna (21) during a sweep period (T) of a predetermined length. The transmitter/receiver (22) outputs digital data (Dd) by digitally converting the echo signal indicating the received reflected wave.

The transmitter/receiver (22) periodically repeats the transmission of the electromagnetic wave and the generation of digital data (Dd) while rotating the antenna (21) so that the azimuth angle in the transmission direction of the electromagnetic wave changes by a predetermined angle every sweep period (T). Each time the transmitter/receiver (22) generates digital data (Dd), it outputs the generated digital data (Dd) to the signal processing module (23).

The signal processing module (23) outputs divided echo data (EdD) based on a plurality of digital data (Dd) received from the transmitter/receiver (22). For example, the signal processing module (23) generates the divided echo data (EdD) in which echo levels at a plurality of positions of the division target area (Da) are binarized. More specifically, the divided echo data (EdD) is generated in which the value of the echo level at a position where the echo level is equal to or greater than a predetermined threshold (Tx) among a plurality of positions of the division target area (Da) is converted to "1" and the value of the echo level at a position where the echo level is less than the threshold (Tx) is converted to "0". Each time the signal processing module (23) generates divided echo data (EdD), it transmits the generated divided echo data (EdD) to the target tracking unit (101).

Tracking processing module - The echo data acquiring module (11) in the target tracking unit (101) acquires the concatenated echo data (EdC) which is the echo data (Ed) indicating the correspondence between the position in the target detection area and the echo level in the position.

More specifically, the echo data acquiring module (11) receives the divided echo data (EdD) from the signal processing module (23) and stores the received divided echo data (EdD) in the memory (13). Each time the divided echo data (EdD) stored in the memory (13) reaches (N), the echo data acquiring module (11) acquires (N) divided echo data (EdD) from the memory (13) and concatenates them to generate the concatenated echo data (EdC). The echo data acquiring module (11) stores the generated concatenated echo data (EdC) in the memory (13).

The tracking processing module (12) performs tracking processing to track the target (S) based on the echo data (Ed). More specifically, when the echo data acquiring module (11) stores the concatenated echo data (EdC) in the memory (13), the tracking processing module (12) specifies coordinates indicating the current position of the target (S) based on the concatenated echo data (EdC). Then, the index calculator (15) calculates the predicted speed vector (Vc) of the target (S) based on the coordinates indicating the present position of the specified target (S) and the speed vector inferred from the coordinates of the target (S) in the past sweep period (T).

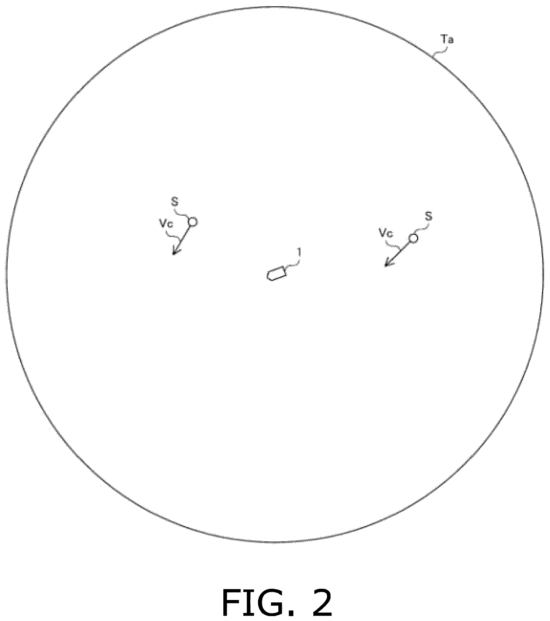

Figure 2 is a diagram showing an example of an echo image displayed by the tracking processing module in the radar equipment according to an embodiment of the present invention. Referring to Figure 2, the tracking processing module (12) performs processing to display the target (S). More specifically, the tracking processing module (12) generates an echo image showing the coordinates of the target (S) in the target detection area (Ta) and the predicted speed vector (Vc) of the target (S) and performs processing to display the generated echo image on a display (30).

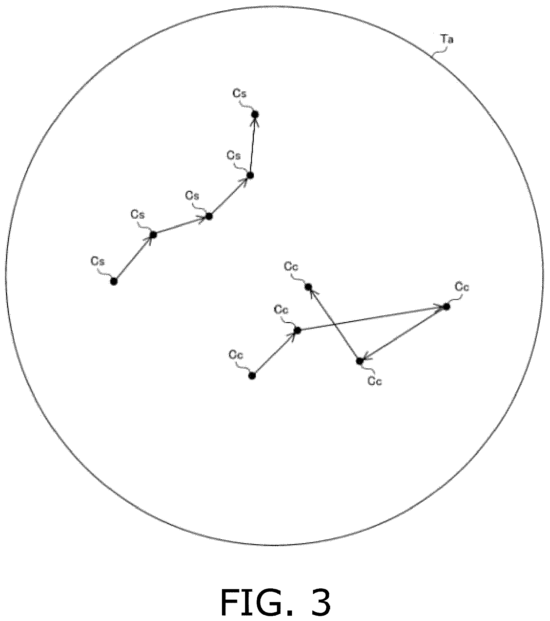

Figure 3 is a diagram showing a trail of the target to be detected by the radar equipment according to the embodiment of the present invention and a trail of the clutter generation point.

Figure 3 shows the coordinates (Cs) of the target (S) and the coordinates (Cc) of the clutter generation point (C) specified by the tracking processing module (12) based on the time series of 5 concatenated echo data (EdC). For example, the clutter is a sea clutter and a clutter generation point (C) is a sea surface.

Referring to Figure 3, the wobble at the clutter generating point (C) is larger than the wobble at the target (S). This is because clutter occurs randomly at any position on the sea surface. In the conventional radar equipment, instead of the target (S) to be tracked, the clutter occurrence point (C) may be tracked preferentially. Therefore, the target tracking unit (101) according to the embodiment of the present invention suppresses erroneous tracking of the target (S) at the target detection area (Ta) where clutter occurs by the following configuration.

Calculation of the index (IN) - the index calculator (15) calculates the index (IN) indicating the wobble of the target (R) whose echo level is equal to or greater than a predetermined value based on the plurality of echo data (Ed) of the time series. For example, when the tracking processing module (12) detects the unknown target (R) based on the concatenated echo data (EdC) stored in the memory (13) by the echo data acquiring module (11), the index calculator (15) calculates the index (IN) indicating the wobble of the detected target (R).

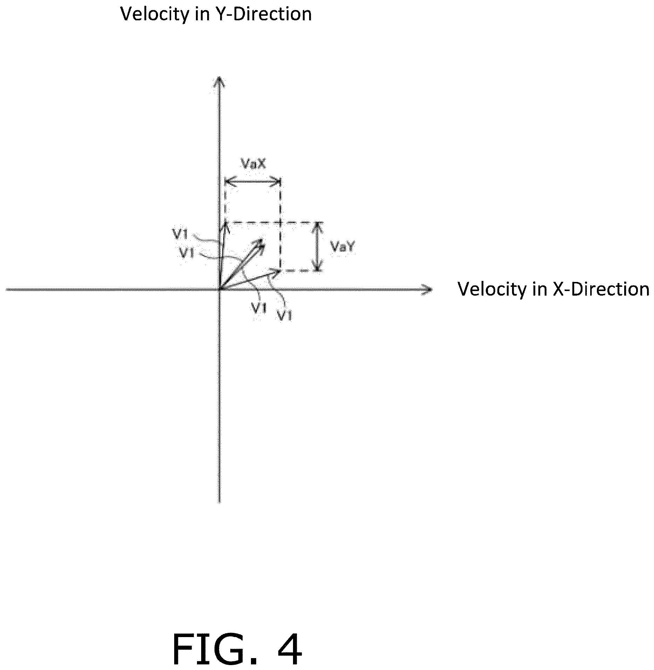

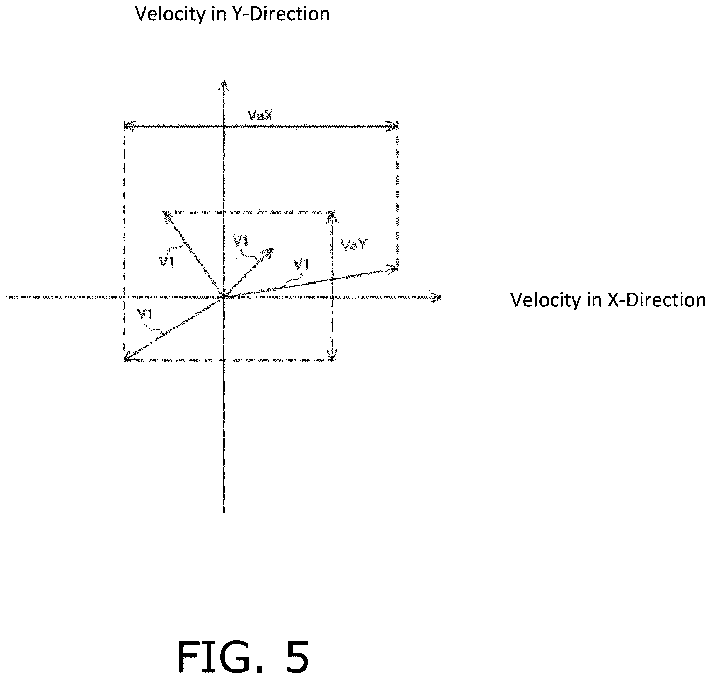

Figures 4 and 5 are diagrams showing an example of the method for calculating the index by the tracking processing module in the radar equipment according to the embodiment of the present invention. In Figures 4 and 5, the horizontal axis indicates the velocity in the X direction, and the vertical axis indicates the velocity in the Y direction. The X direction is, for example, an east-west direction. The Y direction is, for example, a north-south direction. Figure 4 shows an absolute value Va which is an index (IN) calculated based on the trail of target (S) shown in figure 3. Figure 5 shows an absolute value (Va) which is an index (IN) calculated based on the trail of the clutter generating point (C) shown in Figure 3.

Referring to figure 4 and figure 5, when the tracking processing module (12) detects the target (R), the index calculator (15) calculates the four velocity vectors (V1) of the target (R) using the five connected echo data (EdC) of the time series.

Then, as the index (IN) of the target (R), the index calculator (15) calculates the absolute value (Va) of the difference between the maximum value of the calculated four velocity vectors (V1) and the minimum value of the four velocity vectors (V1). More specifically, as the index (IN) of the target (R), the index calculator (15) calculates the absolute value (VaX), which is the absolute value (Va) of the difference between the maximum value and the minimum value of the four velocity vectors (V1) in the (X) direction, and the absolute value (VaY), which is the absolute value (Va) of the difference between the maximum value and the minimum value of the four velocity vectors (V1) in the Y direction.

The tracking processing module (12) may be configured to calculate two, three, or five or more velocity vectors (V1) using three, four, or six or more connected echo data (EdC), and to calculate absolute values (VaX) and (VaY) based on the calculated velocity vectors (V1).

Determination of threshold (TH) - The index calculator (15) determines the threshold (TH) based on the size of the target (R). For example, when the target extracting module (12) detects an unknown target (R) based on the concatenated echo data (EdC) stored in memory (13) by the echo data acquiring module (11), the index calculator (15) calculates the size of the unknown target (R) and determines the threshold (TH) based on the size of the detected target (R).

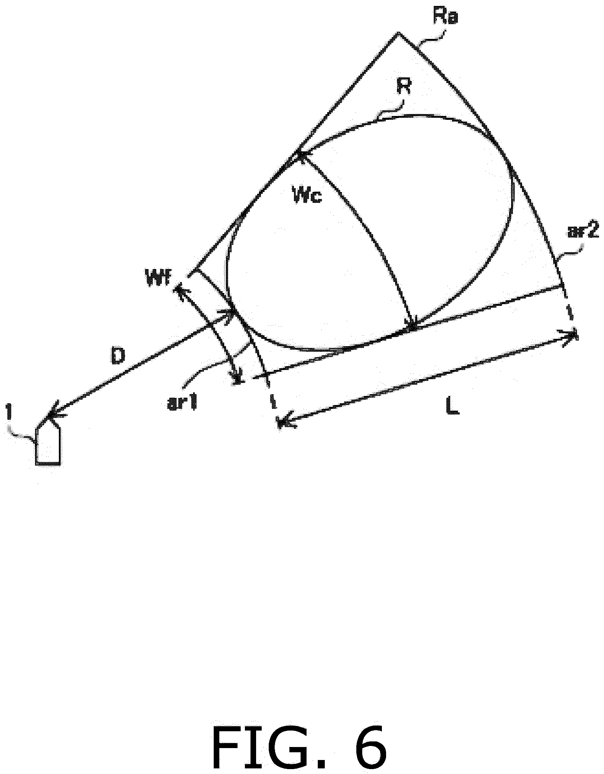

Figure 6 is a diagram showing an example of a method for determining a threshold by the tracking processing module (12) in a radar equipment according to an embodiment of the present invention.

Referring to figure 6, when the tracking processing module (12) detects the target (R), the target (R) is approximated by a polygonal reference shape (Ra). For example, reference shape (Ra) is a Baumkuchen-type shape. More specifically, reference shape (Ra) is a region bounded by two straight lines extending in the distance from antenna (21) and two arcs ar1, ar2 extending in the azimuthal direction around antenna (21). That is, the reference shape (Ra) is a region bounded by two circular arcs ar1, ar2 centered at antenna (21) and two-line segments connecting the two ends of arc ar1 and the two ends of arc ar2, respectively. The tracking processing module (12) approximates a region of the target (R) whose echo level is equal to or greater than a predetermined value by reference shape (Ra) inscribed with the region of the target (R). For example, the reference shape (Ra) may be a sectorial region.

When the target (R) is approximated by the reference shape (Ra), the index calculator (15) calculates the depth length (L) of the reference shape (Ra) relative to the antenna (21). The index calculator (15) calculates the distance (D) between the antenna (21) and the target (R). The index calculator (15) calculates the width (W) of the reference shape (Ra) in the azimuthal direction around the antenna (21). More specifically, the index calculator (15) calculates the front width (Wf), which is the width (W) corresponding to the length of the arc ar1, and the center width (Wc), which is the width (W) passing through the midpoint of the reference shape (Ra) in the depth direction.

The tracking processing module (12) determines the threshold (TH) based on the magnitude of the reference shape (Ra). More specifically, the index calculator (15) calculates the threshold (TH) according to the following equation (1):

Equation (1)

$$TH = min\left(Wf, \ \frac{L+Wc}{2}\right) + \alpha \ \cdot \ \cdot \ \cdot \ (1)$$

Here, $\alpha$ is a fixed value which is set in advance according to the speed and acceleration of the target S to be assumed.

For example, the index calculator (15) calculates the size of the target (R) based on the distance (D) between the antenna (21) and the target (R). More specifically, the smaller the distance (D), the larger the size of the region of the target (R) calculated by the tracking processing module (12), regardless of the actual size of the target (R). Therefore, the tracking processing module (12) corrects the length (L), the front-most width (Wf), and the center width (Wc) by using the coefficient (Cf) corresponding to the distance (D) and calculates the threshold (TH) by using the corrected length (L), the front-most width (Wf), and the center width (Wc).

Tracking processing - the tracking processing module (12) judges whether or not the index (IN) is equal to or greater than the threshold (TH). More specifically, when the index calculator (15) calculates the absolute values VaX and VaY, which are the indexes (IN) of the target (R), and the threshold (TH), it compares the calculated absolute values VaX and VaY with the calculated threshold (TH).

For example, when the absolute values VaX and VaY of the target (R) are both less than the threshold (TH), the tracking processing module (12) tracks the target (R) as the target (S). That is, the tracking processing module (12) determines that the target (R) is the target (S) of the detection target and determines to include the target (R) as the tracking target. Then, the tracking processing module (12) starts tracking the target (R).

On the other hand, the tracking processing module (12) does not track the target (R) when at least one of the absolute values VaX and VaY of the target (R) is equal to or greater than the threshold (TH). That is, the tracking processing module (12) determines that the target (R) is not the target (S) of the detection target and decides to remove the target (R) from the tracking target in the tracking processing.

For example, the tracking processing module (12) removes the target (R) from the tracking target in the tracking processing based on the linked echo data (EdC) and other linked echo data (EdC) generated after the linked echo data (EdC) when one of the absolute values VaX and VaY of the target (R) detected based on the linked echo data (EdC) is equal to or greater than the threshold (TH).

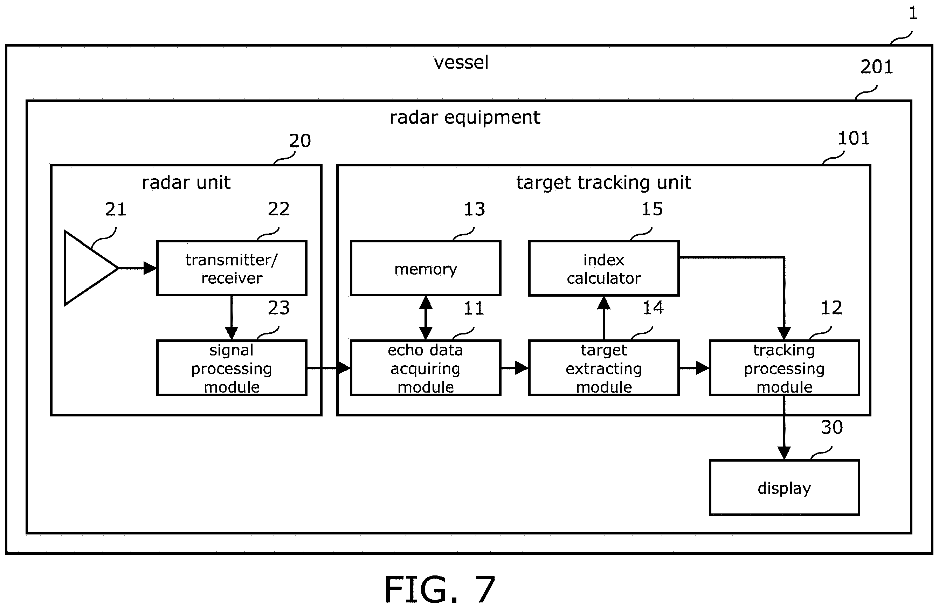

Figure 7 is a diagram showing another configuration of a radar equipment according to an embodiment of the present invention.

In this embodiment, the tracking processing module (12) maintains the target (R) from the tracking target even if the absolute values VaX and VaY of the target (R) are less than the threshold (TH) in other linked echo data (EdC) generated after the linked echo data (EdC), for example, when one of the absolute values VaX and VaY of the target (R) in the linked echo data (EdC) generated first after the activation of the target tracking unit (101) is equal to or greater than the threshold (TH).

For example, the tracking processing module (12) further performs background tracking processing to track the target (R) removed from the tracking target in the tracking processing. While the tracking processing module (12) performs processing to display the target (S) as described above, it does not perform processing to display the tracking result of the tracked target (R) in the background tracking processing. That is, the tracking processing module (12) generates an echo image that indicates the position of the target (S) and does not contain information such as the position of the target (R) and performs processing to display the generated echo image on a display device (not shown).

In addition to the target (S), the tracking processing module (12) may be configured to perform processing to display the target (R) tracked in the background tracking processing. In this case, for example, the tracking processing module (12) performs a process of displaying the target (S) tracked in the tracking process and the target (R) tracked in the background tracking processing different ways from each other. Specifically, the tracking processing module (12) performs a process of displaying the icon indicating the target (S) and the icon indicating the target (R) in different colors from each other.

Since it is obvious that the modified configuration described in the embodiment shown in figure 1 may also be adopted in the above embodiment shown in figure 7, the detailed description thereof is omitted.

Flow of operation - the radar equipment according to an embodiment of the present invention includes a computer including a memory, and a processor such as a CPU in the computer reads a program including a part or all of the steps of the following flowchart from the memory and executes the program. The program of the equipment can be installed externally. The program of the equipment is distributed in the state stored in the recording medium or through the communication line.

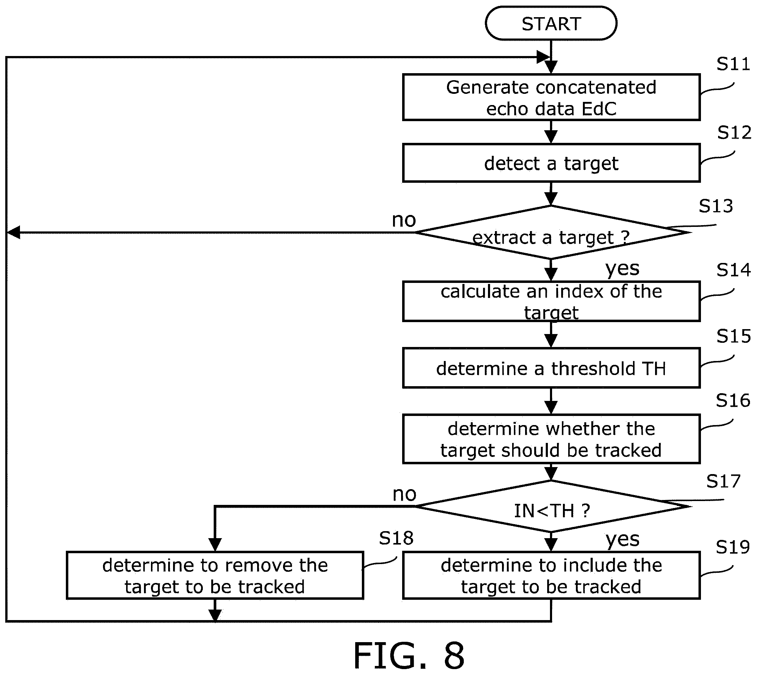

Figure 8 is a flowchart showing an example of the operation when the target tracking processing module in the radar equipment according to the embodiment of the present invention performs tracking processing.

Referring to figure 7, at first, the target tracking unit (101) generates the concatenated echo data (EdC) by concatenating the N divided echo data (EdD) received from the radar unit (20) (step S 11).

Next, the target tracking unit (101) performs a process of tracking the target (S) and displaying the target (S) based on the concatenated echo data (EdC) generated. More specifically, the target tracking unit (101) generates an echo image showing the coordinates of the target (S) and the predicted speed vector (Vc) of the target (S), and performs a process of displaying the generated echo image on a display device (not shown) (step S12).

Next, the target tracking unit (101) repeats the processes of steps S11 and S12 until the unknown target (R) is detected (NO in step S 13) based on the generated concatenated echo data (EdC).

Next, when the unknown target (R) is detected based on the generated concatenated echo data (EdC) (YES in step S 13), the index calculator (15) of the target tracking unit (101) calculates the index (IN) of the target (R) using the 5 concatenated echo data (EdC) of the time series. More specifically, the target tracking unit (101) calculates the absolute values VaX and VaY of the target (R) as the index (IN) of the target (R) (step S14).

The target tracking unit (101) then determines the threshold (TH) based on the size of the target (R). More specifically, The target tracking unit (101) approximates the target (R) by a polygonal reference shape (Ra), and calculates the threshold (TH) based on the size of the reference shape (Ra) according to equation (1) described above (step S 15).

Next, the target tracking unit (101) performs determination processing to determine whether the index (IN) of the target (R) is equal to or greater than the threshold (TH) (step S16).

Next, if at least one of the absolute values VaX and VaY, which are the indexes (IN) of the target (R), is equal to or greater than the threshold (TH) (NO in step S 17), the target tracking unit (101) determines to remove the target (R) from the tracking target (step S18).

Next, the target tracking unit (101) repeats the processing in steps S11 and S12 until it detects a new unknown target (R) (NO in step S 13).

On the other hand, if the absolute values VaX and VaY of the target (R) are both less than the threshold (TH) (YES in step S 17), the target tracking unit (101) determines that the target (R) is the target (S) of the detection target and decides to include the target (R) as the tracking target (step S19).

Next, the target tracking unit (101) repeats the processing of step S11 and step S12 until a new unknown target (R) is detected (NO in step S 13).

When the target tracking unit (101) determines to remove the target (R) from the tracking target in step S 18, the target tracking processing module may start the background tracking processing to track the target (R). In this case, for example, the target tracking unit (101) performs the processing to display the target (S) in the processing in step S12. However, it does not perform the processing to display the tracking result of the tracked target (R) in the background tracking processing. That is, while the target tracking unit (101) tracks the target (R) in the background tracking processing, it generates an echo image containing no information such as the position of the target (R) and performs the processing to display the generated echo image on a display device (not shown).

In the target tracking unit (101) according to the embodiment of the present invention, the tracking processing module (12) is configured to calculate the absolute values VaX and VaY as the indexes (IN) of the target (R), but is not limited to this. The tracking processing module (12) may be configured to calculate other statistical values for the plurality of velocity vectors (V1) of the target (R) instead of or in addition to the absolute values VaX and VaY. The statistical values may be mean, median, or standard deviation.

In the target tracking unit (101) according to the embodiment of the present invention, the tracking processing module (12) is configured to calculate the threshold (TH) according to the equation (1), but this is not limited to the above. The tracking processing module (12) may be configured to further determine the threshold (TH) based on the size of the target (R) and AIS information received from another ship. In this case, the tracking processing module (12) further determines the threshold TH based on the size of the other ship around the vessel (1) indicated by the AIS information.

In addition, the index calculator (15) may be configured to calculate the threshold TH according to other mathematical expressions instead of the equation (1). For example, the index calculator (15) may calculate the threshold (TH) according to the following equation (2) because the azimuthal wobble of the target (S) dominates and the component of the wobble in the distance direction can be ignored when tracking the point closest to the antenna (21) in the target (S) in the tracking processing.

Equation (2)

$$TH = min(Wf, \ Wc \times k) + \alpha \cdot \cdot \cdot (2)$$

where k is a constant. For example, k is greater than zero and less than or equal to one.

On the other hand, since the tracking processing module (12) cannot ignore the component of the wobble in the distance direction, when tracking the center point in the target (S) in the tracking processing, it calculates the threshold (TH) according to the above formula (1).

It should be considered that the above embodiment is exemplary in all respects and not restrictive. It is intended that the scope of the present invention be indicated by the claims rather than the above description and include all changes within the meaning and scope of the claims and equivalence.

[List of Reference Numerals]

1 vessel
11 echo data acquiring module
12 tracking processing module
13 memory
14 target extracting module
15 index calculator
20 radar unit
21 antenna
22 transmitter/receiver
23 signal processing module
30 display
101 target tracking processing unit
201 radar equipment
Ta target detection area
S target
Vc predicted speed vector
Cs, Cc coordinate
V1 speed vector
VaX, VaY absolute value
R target
Ra reference shape
Wf front width
Wc center width
L length
D distance
ar1, ar2 arc

## Claims

1. A target tracking apparatus for tracking a target in a detection area, comprising:

   an echo data acquiring module (11) configured to acquire echo data indicating a correspondence relationship between a position in the detection area and the level of the reflected wave at which the electromagnetic wave transmitted through an antenna (21) is reflected at the position;
   a target extracting module (14) configured to extract the target (S) based on the echo data;
   an index calculator (15) configured to:

      calculate an index indicating a wobble of the target (S) whose level of the reflected wave is equal to or greater than a predetermined value based on echo data of the target (S); and
      determine a threshold based on the size of the target (S) and determine whether the index is equal to or greater than the threshold; and

a tracking processing module (12) configured to track the target (S) based on the echo data of the target (S),

wherein the tracking processing module (12) is configured to:

track the target (S) when the index is less than the threshold; and
remove the target (S) when the index is equal to or greater than the threshold.

2. A target tracking apparatus for tracking a target (S) in a detection area, comprising:

an echo data acquiring module (11) configured to acquire echo data indicating a correspondence relationship between a position in the detection area and the level of the reflected wave at which the electromagnetic wave transmitted through an antenna (21) is reflected at the position;
a target extracting module (14) configured to extract the target (S) based on the echo data;
an index calculator (15) configured to:

calculate an index indicating a wobble of the target (S) whose level of the reflected wave is equal to or greater than a predetermined value based on the echo data of the target (S);
determine a threshold based on the size of the target (S) and determine whether the index is equal to or greater than the threshold; and

a tracking processing module (12) configured to track the target (S) based on the target echo data,

wherein the tracking processing module (12) is configured to:

track the target (S) in a normal tracking process when the index is less than the threshold; and
track the target (S) in a background tracking process when the index is equal to or greater than the threshold.

3. The target tracking apparatus according to claim 2, further comprising:

a display (30) configured to display the target (S) tracked, and
wherein the display (30) skips to display the target (S) tracked by the background tracking process.

4. The target tracking apparatus according to claim 2, further comprising:

a display (30) configured to display the target (S) tracked, and
wherein the display (30) displays the target (S) tracked by the background tracking process in a manner different from the target (S) tracked by the normal process.

5. The target tracking apparatus according to claim 2, wherein:

the echo data acquiring module (11) is configured to periodically acquire the echo data, and
the tracking processing module (12) is configured to remove the target (S) tracked based on a first target echo data and the target echo data acquired after the first echo data, when the index indicating the wobble of the target (S) extracted based on the first target echo data is equal to or greater than the threshold.

6. The target tracking apparatus according to claim 1 or 2, wherein:
the index calculator (15) is configured to approximate the target (S) by a polygonal reference shape and determine the threshold based on the size of the polygonal reference shape.

7. The target tracking apparatus according to any of claims 1 to 5, wherein:
the index calculator (15) is configured to:

approximate the target (S) by a reference shape surrounded by two lines extending in the distance direction from the antenna (21) and two arcs extending in the azimuthal direction around the antenna (21); and
determine the threshold based on the size of the reference shape.

8. The target tracking apparatus according to any of claims 1 to 5, wherein:
the index calculator (15) is configured to calculate the size of the target (S) based on the distance between the antenna (21) and the target (S).

9. The target tracking apparatus according to any one of claims 1 to 5, wherein:
the index calculator (15) is further configured to determine the threshold based on Automatic Identification System (AIS) information transmitted from another vessel (1).

10. A target tracking method for tracking target in a detection area, comprising:

acquiring echo data indicating a correspondence relationship between a position in the detection area and the level of the reflected wave at which the electromagnetic wave transmitted through the antenna (21) is reflected at the position;
extracting a target (S) based on the echo data;
calculating an index indicating a wobble of the target (S) whose level of the reflected wave is equal to or greater than a predetermined value based on the echo data of the target (S);
determining a threshold based on the size of the target (S) and determine whether the index is equal to or greater than the threshold;
tracking the target (S) in a normal tracking process when the index is less than the threshold; and
tracking the target (S) using a background tracking process when the index is equal to or greater than the threshold.

11. The target tracking method according to claim 10, comprising:

displaying the target tracked in the normal tracking process; and
skipping to display the target tracked by the background tracking process.

12. The target tracking method according to claim 10, comprising:

displaying the target tracked; and
displaying the target tracked by the background tracking process in a manner different from the target tracked by the normal process.

13. The target tracking method according to claim 10, comprising:

acquiring the echo data periodically; and
removing the target tracked based on a first target echo data and target echo data acquired after the first echo data, when the index indicating the wobble of the target extracted based on the first target echo data is equal to or greater than the threshold.

14. The target tracking method according to claim 10, comprising:

approximating the target by a polygonal reference shape; and
determining the threshold based on the size of the polygonal reference shape.

15. The target tracking method according to any of claims 10 to 14, wherein:

approximating the target by a reference shape surrounded by two lines extending in the distance direction from the antenna (21) and two arcs extending in the azimuthal direction around the antenna (21); and
determining the threshold based on the size of the reference shape.

**Amended claims in accordance with Rule 137(2) EPC.**

1. A target tracking apparatus for tracking a target in a detection area, comprising:

an echo data acquiring module (11) configured to acquire a time series of echo data indicating a correspondence relationship between a position in the detection area and the level of the reflected wave at which the electromagnetic wave transmitted through an antenna (21) is reflected at the position;
a target extracting module (14) configured to extract the target (S) based on the echo data;
an index calculator (15) configured to:

calculate speed vectors of the target (S) based on the echo data;

calculate as an index indicating a wobble of the target (S) whose level of the reflected wave is equal to or greater than a predetermined value an absolute value of a difference between a maximum value of the speed vectors and a minimum value of the speed vectors; and

determine a threshold based on the size of the target (S) and determine whether the index is equal to or greater than the threshold; and

a tracking processing module (12) configured to track the target (S) based on the echo data of the target (S),

wherein the tracking processing module (12) is configured to:

track the target (S) when the index is less than the threshold; and
remove the target (S) when the index is equal to or greater than the threshold.

2. A target tracking apparatus for tracking a target (S) in a detection area, comprising:

an echo data acquiring module (11) configured to acquire a time series of echo data indicating a correspondence relationship between a position in the detection area and the level of the reflected wave at which the electromagnetic wave transmitted through an antenna (21) is reflected at the position;

a target extracting module (14) configured to extract the target (S) based on the echo data;
an index calculator (15) configured to:

calculate speed vectors of the target (S) based on the echo data;

calculate as an index indicating a wobble of the target (S) whose level of the reflected wave is equal to or greater than a predetermined value an absolute value of a difference between a maximum value of the speed vectors and a minimum value of the speed vectors;

determine a threshold based on the size of the target (S) and determine whether the index is equal to or greater than the threshold; and

a tracking processing module (12) configured to track the target (S) based on the target echo data,
a display (30) configured to display the target (S) tracked,

wherein the tracking processing module (12) is configured to:

track the target (S) in a normal tracking process when the index is less than the threshold;
track the target (S) in a background tracking process when the index is equal to or greater than the threshold, wherein the display (30) is configured to skip to display the target (S) tracked by the background tracking process or the display (30) is configured to display the target (S) tracked by the background tracking process in a manner different from the target (S) tracked by the normal process.

3. The target tracking apparatus according to claim 2, wherein:

the echo data acquiring module (11) is configured to periodically acquire the echo data, and
the tracking processing module (12) is configured to remove the target (S) tracked based on a first target echo data and the target echo data acquired after the first echo data, when the index indicating the wobble of the target (S) extracted based on the first target echo data is equal to or greater than the threshold.

4. The target tracking apparatus according to any of claims 1 to 3, wherein:
the index calculator (15) is configured to approximate the target (S) by a polygonal reference shape and determine the threshold based on the size of the polygonal reference shape.

5. The target tracking apparatus according to any of claims 1 to 3, wherein:

the index calculator (15) is configured to:

approximate the target (S) by a reference shape surrounded by two lines extending in the distance direction from the antenna (21) and two arcs extending in the azimuthal direction around the antenna (21); and
determine the threshold based on the size of the reference shape.

6. The target tracking apparatus according to any of claims 1 to 3, wherein:
the index calculator (15) is configured to calculate the size of the target (S) based on the distance between the antenna (21) and the target (S).

7. The target tracking apparatus according to any one of claims 1 to 3, wherein:
the index calculator (15) is further configured to determine the threshold based on Automatic Identification System, AIS, information transmitted from a vessel (1).

8. A target tracking method for tracking target in a detection area, comprising:

acquiring a time series of echo data indicating a correspondence relationship between a position in the detection area and the level of the reflected wave at which the electromagnetic wave transmitted through the antenna (21) is reflected at the position;
extracting a target (S) based on the echo data;
calculating speed vectors of the target (S) based on the echo data;
calculating as an index indicating a wobble of the target (S) whose level of the reflected wave is equal to or greater than a predetermined value an absolute value of a difference between a maximum value of the predicted speed vectors and a minimum value of the predicted speed vectors;
determining a threshold based on the size of the target (S) and determine whether the index is equal to or greater than the threshold;
tracking the target (S) in a normal tracking process when the index is less than the threshold; and
tracking the target (S) using a background tracking process when the index is equal to or greater than the threshold
displaying the target tracked in the normal tracking process; and
skipping to display the target tracked by the background tracking process or displaying the target tracked by the background tracking process in a manner different from the target tracked by the normal process.

9. The target tracking method according to claim 8, comprising:

acquiring the echo data periodically; and
removing the target tracked based on a first target echo data and target echo data acquired after the first echo data, when the index indicating the wobble of the target extracted based on the first target echo data is equal to or greater than the threshold.

10. The target tracking method according to claim 8, comprising:

approximating the target by a polygonal reference shape; and
determining the threshold based on the size of the polygonal reference shape.

11. The target tracking method according to any of claims 8 to 10, wherein:

approximating the target by a reference shape surrounded by two lines extending in the distance direction from the antenna (21) and two arcs extending in the azimuthal direction around the antenna (21); and
determining the threshold based on the size of the reference shape.

FIG. 1

FIG. 2

FIG. 3

Velocity in Y-Direction

Velocity in X-Direction

FIG. 4

Velocity in Y-Direction

Velocity in X-Direction

VaX

VaY

V1

V1

V1

V1

V1

FIG. 5

# FIG. 6

FIG. 7

EP 4 524 607 A1

START

S11
Generate concatenated
echo data EdC

S12
detect a target

S13
no ← extract a target ?

yes

S14
calculate an index of the
target

S15
determine a threshold TH

S16
determine whether the
target should be tracked

S17
no ← IN<TH ?

S18
determine to remove the
target to be tracked

yes

S19
determine to include the
target to be tracked

FIG. 8

Europäisches
Patentamt

European
Patent Office

Office européen
des brevets

# EUROPEAN SEARCH REPORT

**Application Number**

EP 23 21 8722

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/082743 A1 (FUJIKAWA TAKUMI [JP] ET AL) 23 March 2017 (2017-03-23) * abstract; figures 1-8 * * paragraph [0009] - paragraph [0021] * * paragraph [0031] - paragraph [0058] * ----- | 1-15 | INV. G01S7/41 G01S13/534 G01S13/66 G01S7/292 |
| A,D | JP 2012 103197 A (JAPAN RADIO CO LTD) 31 May 2012 (2012-05-31) * the whole document * ----- | 1-15 | |
| A | CN 107 797 101 A (HARBIN INST TECHNOLOGY) 13 March 2018 (2018-03-13) * the whole document * ----- | 1-15 | |

**TECHNICAL FIELDS SEARCHED (IPC)**

G01S

The present search report has been drawn up for all claims

| Place of search | Date of completion of the search | Examiner |
|---|---|---|
| Munich | 23 May 2024 | López de Valle, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 8722

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2024

| Patent document cited in search report | | Publication date | Patent family member(s) | | Publication date |
|---|---|---|---|---|---|
| US 2017082743 | A1 | 23-03-2017 | CN | 106546959 A | 29-03-2017 |
| | | | EP | 3144697 A1 | 22-03-2017 |
| | | | JP | 6526532 B2 | 05-06-2019 |
| | | | JP | 2017058305 A | 23-03-2017 |
| | | | US | 2017082743 A1 | 23-03-2017 |
| JP 2012103197 | A | 31-05-2012 | JP | 5775287 B2 | 09-09-2015 |
| | | | JP | 2012103197 A | 31-05-2012 |
| CN 107797101 | A | 13-03-2018 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012103197 A